# EUROPEAN PATENT SPECIFICATION

(11) **EP 3 912 891 B1**
(45) Date of publication and mention of the grant of the patent: **27.08.2025**
(21) Application number: 21171287.2
(22) Date of filing: 29.04.2021
(51) Int. Cl.: B62D 33/037, B62D 33/03

(54) **UPRIGHT FOR SIDES OF LOADING BEDS OF VEHICLES, PROVIDED WITH AN IMPROVED SLIDE**
STÜTZE FÜR SEITEN VON LADEFLÄCHEN VON FAHRZEUGEN MIT EINEM VERBESSERTEN GLEITER
MONTANT POUR LES CÔTÉS DES PLATEAUX DE CHARGEMENT DES VÉHICULES, MUNI D'UNE GLISSIÈRE AMÉLIORÉE

(30) Priority: 18.05.2020 IT 202000011362
(43) Date of publication of application: 24.11.2021
(73) Proprietor: Takler S.r.l., 70022 Altamura (BA) (IT)
(72) Inventor: BARATTINI, Daniele, I-70022 Altamura, Bari (IT)
(74) Representative: Mitola, Marco

(56) References cited:
- WO-A1-2017/134550
- DE-U1- 29 815 650
- DE-U1- 9 316 195

## Description

### FIELD OF APPLICATION

The present invention relates to an upright for vehicle loading bed sides, in particular for industrial and/or commercial vehicles, provided with an improved slide.

### BACKGROUND ART

As known, in the transport sector, loading beds are frequently used provided with sides, which must be movable from a raised position, in which they define and delimit a cargo containment compartment, to a lowered position in which they facilitate the access to said compartment to load and/or unload cargo.

The sides are usually arranged in a perimetric position relative to the compartment and are hinged to the edge of the compartment to be able to be raised and lowered, rotating around their respective hinges.

The rotation movement of the sides is allowed/inhibited by the presence of uprights provided with appropriate locking systems which use a pin, associated with a side, adapted to couple with a respective seat obtained on an upright of the adjacent side.

The pin can be moved by actuating a respective operating lever integrated with the side.

The pins and their seats are arranged on uprights at side end positions of mutually adjacent sides.

The known solutions have some drawbacks and limitations.

Indeed, there are solutions of pivots having horizontal orientation, i.e., parallel to the hinge axis, and vertical orientation, i.e., perpendicular to said hinge axis, in the background art.

Furthermore, each upright will be of the left or the right type according to its position on the loading bed.

This means that in the known solutions the production of the uprights must be diversified to make four different types of uprights provided with specific mechanisms (slides) according to the position on the side of the loading bed.

It is apparent that such diversification of production implies a considerable increase in production costs but also of the assembly time and costs.

Furthermore, the locking/unlocking mechanisms are subject to continuous vibrations transmitted from the vehicle floor which, in the long run, generate loosening of the mechanisms, with continuous and annoying vibrations and noises, clearly noticeable also by the driver of the vehicle.

Therefore, the known solutions of loading bed uprights also have the problem of being noisy at use. Solutions according to prior art are disclosed by WO 2017/134550 A1 and DE 29815650 U1.

### PRESENTATION OF THE INVENTION

Therefore, the need is felt to solve the drawbacks and limitations mentioned above with reference to the prior art.

In particular, the need is felt to make available an upright for the sides of vehicle loading beds, in particular for industrial and/or commercial vehicles, provided with an improved slide, which does not require different designs according to the type of pin and/or the positioning of the side itself on the loading bed and which is not subject to loosening and vibrations during the use of the vehicle on which it is applied.

Such a need is met by an upright for sides of loading beds of vehicles according to claim 1.

### DESCRIPTION OF THE DRAWINGS

Further features and advantages of the present invention will be more comprehensible from the following description of preferred embodiments given by way of nonlimiting examples, in which:

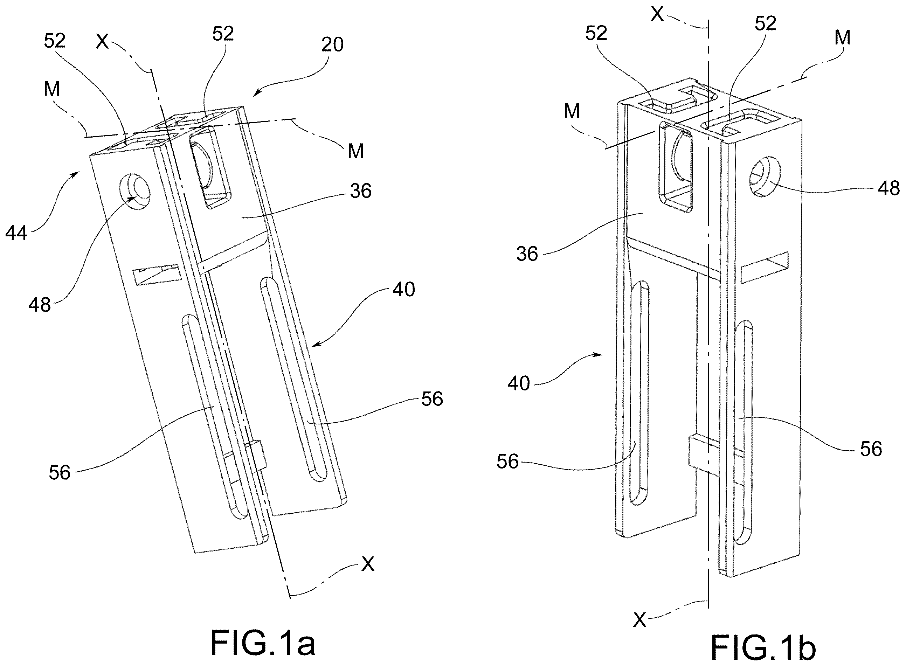

figures 1a-1b show perspective views, from different angles, of an upright slide according to an embodiment of the present invention, adapted to house a vertical locking/unlocking pin;

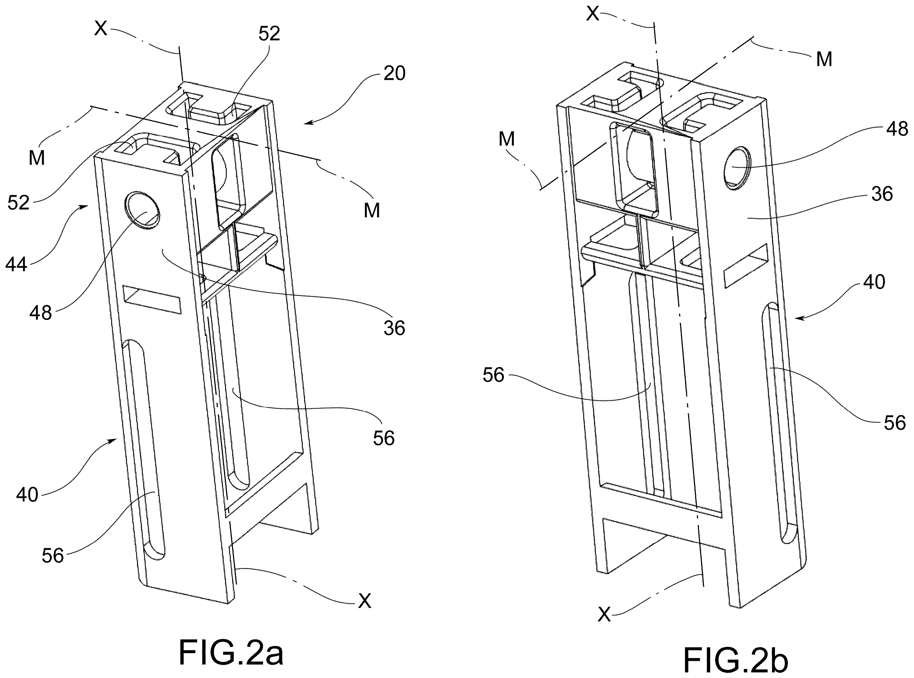

figures 2a-2b show perspective views, from different angles, of an upright slide according to an embodiment of the present invention, adapted to house a horizontal locking/unlocking pin;

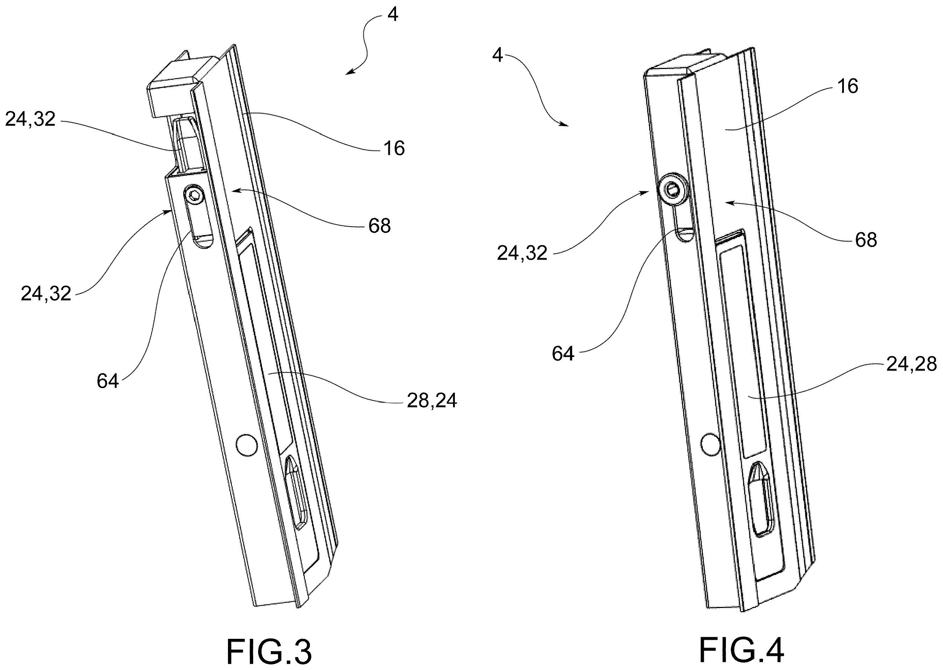

figure 3 shows a perspective front view of a left upright provided with a vertical locking/unlocking pin according to an embodiment of the present invention;
figure 4 shows a perspective front view of a left upright provided with a horizontal locking/unlocking pin according to an embodiment of the present invention;

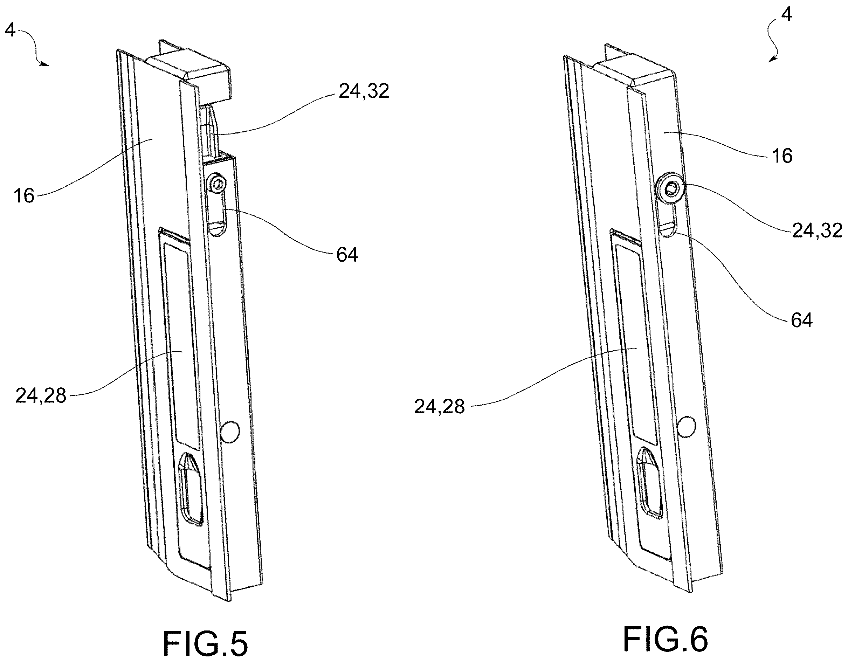

figure 5 shows a perspective front view of a right upright provided with a vertical locking/unlocking pin according to an embodiment of the present invention;
figure 6 shows a perspective front view of a right upright provided with a horizontal locking/unlocking pin according to an embodiment of the present invention;

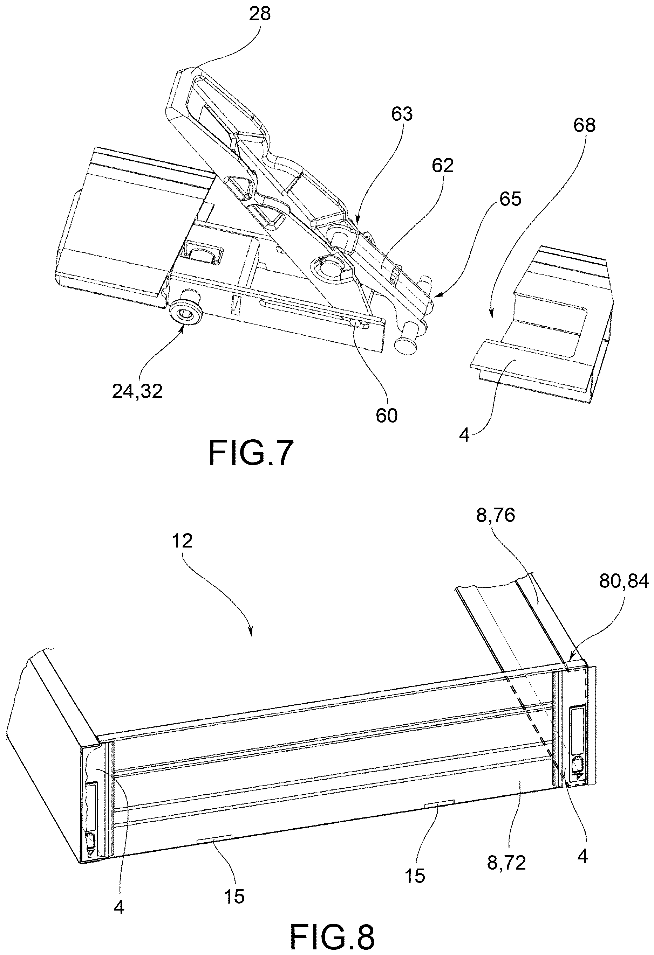

figure 7 shows a perspective partial section view of an upright, according to an embodiment of the present invention;
figure 8 is a perspective view of a vehicle loading bed provided with uprights according to the present invention.

Elements or parts in common to the embodiments described will be indicated hereafter using the same reference numerals.

### DETAILED DESCRIPTION

With reference to the aforementioned figures, reference numeral 4 indicates as a whole a diagrammatic view of an upright for sides 8 of loading beds 12 of vehicles, in particular for industrial and/or commercial vehicles.

The side 8 are preferably hinged to a frame of the loading bed 12, by means of appropriate hinges 15. Neither the type nor the positioning of the hinges 15 relative to the loading bed is relevant for the purposes of the present invention. For example, internal, external, horizontal, vertical or concealed hinges and so on may be used.

The upright 4 comprises a hollow upright body 16 housing a slide 20 adapted to guide a locking/unlocking mechanism 24 for the upright 4 itself.

The locking/unlocking mechanism 24 is provided, in turn, with an operating lever 28 and a locking/unlocking pin 32, operatively connected to said operating lever 28 to go from a retracted or opening configuration to an extracted or closing configuration.

Advantageously, the slide 20 comprises a slide body 36 provided with a guide portion 40 of the operating lever 28 and a supporting portion 44 of the locking/unlocking pin.

Preferably, the slide 20 is a single piece obtained by molding plastic material.

According to the invention, the slide body extends along a prevailing longitudinal direction X-X.

The supporting portion 44 comprises a horizontal hole 48, perpendicular to said prevailing longitudinal direction X-X and passing along the entire slide body 36.

According to the invention, the supporting portion 44 comprises a pair of vertical holes 52 arranged symmetrically relative to a centerline plane M-M of the slide body 36, parallel to said prevailing longitudinal direction X-X.

The horizontal holes 48 and the vertical holes 52 are co-present in the same slide body 36.

Said centerline plane M-M is also a symmetry plane for the slide body 36.

According to an embodiment, the slide body 36 comprises a pair of slots 56, parallel to said prevailing longitudinal direction X-X to accommodate and guide a rod or guide pin 60 of the operating lever 28.

In other words, the guide pin 60 may slide within the slots 56 during the opening and closing movement of the operating lever 28.

The operating lever 28 may, in turn, be provided with a connecting rod 62 doubly hinged at a first end thereof 63, to the operating lever 28, and at a second end thereof 65, to the upright body 16.

According to a further embodiment, said locking/unlocking pin 32 is provided with a vertical actuating movement, parallel to said prevailing longitudinal direction X-X.

Preferably, an end-stop slot 64 is provided defining the end-stops in the extraction and retraction movement of the locking/unlocking pin 32.

The upright body 16 preferably comprises a seat or recess 68 for said slide 20 so that, in the closed position, the operating lever 28 is housed within said seat or recess 68.

The loading bed 12 comprises at least a pair of mutually adjacent sides, wherein a first side 72 comprises at least one locking/unlocking pin 32 and a second side 76 is provided with a coupling upright 80, having a recess 84 adapted to receive said locking/unlocking pin 32 of the first side 72 to mechanically constrain said first side 72 and second side 76 to each other.

As can be appreciated from the description above, the uprights for sides of loading beds for vehicles, in particular for industrial and/or commercial vehicles, according to the invention make it possible to overcome the drawbacks presented in the prior art.

In particular, the present invention makes it possible to provide a single type of slide which can be housed both within right uprights and left uprights, and which can be provided with both a horizontal pin and a vertical pin.

Therefore, it is possible to satisfy all upright requests and customizations with a single type of slide. This significantly reduces the costs of manufacturing, warehousing and assembling of the side components.

Furthermore, by virtue of the presence of guides or slots which guide the movement of the operating lever, plays and consequent noise of the locking/unlocking mechanism during vehicle operation are eliminated.

A person skilled in the art can make numerous changes and variants to the solutions described above, all contained within the scope of protection of the invention defined by the following claims to satisfy contingent, specific needs.

## Claims

1. Upright (4) for sides (8) of vehicle loading beds (12), in particular for industrial and/or commercial vehicles, comprising
- a hollow upright body (16) which houses a slide (20) suitable to guide a locking/unlocking mechanism (24) for the upright (4),
- wherein the locking/unlocking mechanism (24) is fitted with an operating lever (28) and a locking/unlocking pin (32), operatively connected to said operating lever (28) so as to change from a retracted or open configuration to an extracted or closed configuration,
**characterized in that**
- the slide (20) comprises a slide body (36) equipped with a guide portion (40) of the operating lever (28) and a support portion (44) of the locking/unlocking pin (32),
- wherein the slide body (36) extends along a prevailing longitudinal direction (X-X),
- wherein the support portion (44) comprises a horizontal hole (48), perpendicular to said prevailing longitudinal direction (X-X) and passing through the entire slide body (36),
- wherein the support portion (44) comprises a pair of vertical holes (52) arranged symmetrically with respect to a centreline plane (M-M) of the slide body (36), parallel to said prevailing longitudinal direction (X-X).

2. The upright (4) for sides (8) of vehicle loading beds (12), according to claim 1, wherein said centreline plane (M-M) is also a plane of symmetry for the slide body (36).

3. The upright (4) for sides (8) of vehicle loading beds (12), according to claim 1 or 2, wherein the slide body (36) comprises a pair of slots (56), parallel to said prevailing longitudinal direction (X-X), so as to house and guide a rod or guide pin (60) of the operating lever (28).

4. The upright (4) for sides (8) of vehicle loading beds (12), according to claim 1, 2 or 3, wherein said locking/unlocking pin (32) is provided with a horizontal drive movement perpendicular to said prevailing longitudinal direction (X-X).

5. The upright (4) for sides (8) of vehicle loading beds (12), according to any of the claims from 1 to 3, wherein said locking/unlocking pin (32) is provided with a vertical actuation movement, parallel to said prevailing longitudinal direction (X-X).

6. The upright (4) for sides (8) of vehicle loading beds (12),according to any of the claims from 1 to 5, wherein an end-stop slot (64) is provided, which defines the end-stops in the extraction and retraction movements of the locking/unlocking pin (32).

7. The upright (4) for sides (8) of vehicle loading beds (12), according to claim 5, wherein the upright body (16) comprises a seat (68) for said slide (20) so that, in the closed position, the operating lever (28) is housed inside said seat (68).

8. The upright (4) for sides (8) of vehicle loading beds (12),according to any of the claims from 1 to 7, wherein the operating lever (28) is fitted with a connecting rod (62) doubly hinged at a first end (63) to the operating lever (28), and at a second end (65) to the upright body (16).

9. The upright (4) for sides (8) of vehicle loading beds (12), according to any of the claims from 1 to 8, wherein the slide (20) is a single piece obtained by moulding plastic material.

10. Side (8) comprising an upright (4) according to any of the claims from 1 to 9, wherein the side (8) has at least one locking/unlocking pin (32) and wherein said side (8) is hinged to the frame of a loading bed (12).

11. Loading bed (12) comprising at least one pair of sides (8) according to claim 10, adjacent to each other, wherein a first side (72) comprises at least one locking/unlocking pin (28) and a second side (76) is fitted with a coupling upright (80), having a slot (84) suitable for receiving said locking/unlocking pin (28) of the first side (72), to mechanically connect said first side (72) and second side (76) to each other.

## Patentansprüche

1. Stütze (4) für Seiten (8) von Ladeflächen von Fahrzeugen (12), insbesondere für Industrie- und/oder Nutzfahrzeuge, umfassend
- einen hohlen Stützenkörper (16), der einen Gleiter (20) aufnimmt, der geeignet ist, einen Verriegelungs-/Entriegelungsmechanismus (24) der Stütze (4) zu führen,
- wobei der Verriegelungs-/Entriegelungsmechanismus (24) mit einem Betätigungshebel (28) und einem Verriegelungs-/Entriegelungsstift (32) versehen ist, der operativ mit dem Betätigungshebel (28) verbunden ist, um von einer eingefahrenen oder offenen Konfiguration in eine ausgefahrene oder geschlossene Konfiguration überzugehen,
**dadurch gekennzeichnet, dass**
- der Gleiter (20) einen Gleiterkörper (36) umfasst, der mit einem Führungsabschnitt (40) des Betätigungshebels (28) und einem Tragabschnitt (44) des Verriegelungs-/Entriegelungsstiftes (32) versehen ist,
- wobei sich der Gleiterkörper (36) entlang einer überwiegenden Längsrichtung (X-X) erstreckt,
- wobei der Tragabschnitt (44) eine Horizontalbohrung (48) umfasst, das sich senkrecht zu der überwiegenden Längsrichtung (X-X) erstreckt und den gesamten Gleiterkörper (36) durchquert,
- wobei der Tragabschnitt (44) ein Paar vertikaler Bohrungen (52) umfasst, die symmetrisch zu einer Mittelinie-Ebene (M-M) des Gleiterkörpers (36) angeordnet sind, die sich parallel zu der überwiegenden Längsrichtung (X-X) erstreckt.

2. Stütze (4) für Seiten (8) von Ladeflächen von Fahrzeugen (12) nach Anspruch 1, wobei die Mittelinie-Ebene (M-M) auch eine Symmetrieebene des Gleiterkörpers (36) ist.

3. Stütze (4) für Seiten (8) von Ladeflächen von Fahrzeugen (12) nach Anspruch 1 oder 2, wobei der Gleiterkörper (36) ein Paar Schlitze (56) umfasst, die sich parallel zu der überwiegenden Längsrichtung (X-X) erstrecken, um eine Stange oder Führungsstift (60) des Betätigungshebels (28) aufzunehmen und zu führen.

4. Stütze (4) für Seiten (8) von Ladeflächen von Fahrzeugen (12) nach Anspruch 1, 2 oder 3, wobei der Verriegelungs-/Entriegelungsstift (32) mit einer horizontalen Antriebsbewegung versehen ist, die sich senkrecht zu der überwiegenden Längsrichtung (X-X) erstreckt.

5. Stütze (4) für Seiten (8) von Ladeflächen von Fahrzeugen (12) nach einem der Ansprüche 1 bis 3, wobei der Verriegelungs-/Entriegelungsstift (32) mit einer vertikalen Betätigungsbewegung versehen ist, die sich parallel zu der überwiegenden Längsrichtung (X-X) erstreckt.

6. Stütze (4) für Seiten (8) von Ladeflächen von Fahrzeugen (12) nach einem der Ansprüche 1 bis 5, wobei ein Endanschlagsschlitz (64) vorgesehen ist, der die Endanschläge bei den Ausfahr- und Einfahrbewegungen des Verriegelungs-/Entriegelungsstiftes (32) definiert.

7. Stütze (4) für Seiten (8) von Ladeflächen von Fahrzeugen (12) nach Anspruch 5, wobei der Stützenkörper (16) einen Sitz (68) für den Gleiter (20) umfasst, so dass der Betätigungshebel (28) sich in der geschlossenen Stellung innerhalb des Sitzes (68) befindet.

8. Stütze (4) für Seiten (8) von Ladeflächen von Fahrzeugen (12) nach einem der Ansprüche 1 bis 7, wobei der Betätigungshebel (28) mit einer Verbindungsstange (62) versehen ist, die an einem ersten Ende (63) an dem Betätigungshebel (28) und an einem zweiten Ende (65) an dem Stützenkörper (16) doppelt gescharniert ist.

9. Stütze (4) für Seiten (8) von Ladeflächen von Fahrzeugen (12) nach einem der Ansprüche 1 bis 8, wobei der Gleiter (20) einstückig ausgebildet ist und durch Formen von Kunststoffmaterial erhalten wird.

10. Seite (8), umfassend eine Stütze (4) nach einem der Ansprüche 1 bis 9, wobei die Seite (8) mindestens einen Verriegelungs-/Entriegelungsstift (32) aufweist und wobei die Seite (8) an dem Rahmen einer Ladefläche (12) gescharniert wird.

11. Ladefläche (12), umfassend mindestens ein Paar von Seiten (8) nach Anspruch 10, die aneinander angrenzen, wobei eine erste Seite (72) mindestens einen Verriegelungs-/Entriegelungsstift (28) umfasst und eine zweite Seite (76) mit einer Kupplungsstütze (80) versehen ist, die einen Schlitz (84) aufweist, der geeignet ist, den Verriegelungs-/Entriegelungsstift (28) der ersten Seite (72) aufzunehmen, um die erste Seite (72) und die zweite Seite (76) mechanisch miteinander zu verbinden.

## Revendications

1. Montant (4) pour les côtés (8) de plateaux de chargement de véhicules (12), en particulier pour véhicules industriels et/ou commerciaux, comprenant
- un corps de montant creux (16) qui loge une glissière (20) apte à guider un mécanisme de verrouillage/déverrouillage (24) du montant (4),
- dans lequel le mécanisme de verrouillage/déverrouillage (24) est muni d'un levier d'actionnement (28) et d'un goujon de verrouillage/déverrouillage (32), relié fonctionnellement audit levier d'actionnement (28) de manière à passer d'une configuration rétractée ou ouverte à une configuration extraite ou fermée,
**caractérisé en ce que**
- la glissière (20) comprend un corps de glissière (36) muni d'une portion de guidage (40) du levier d'actionnement (28) et d'une portion de support (44) du goujon de verrouillage/déverrouillage (32),
- dans lequel le corps de glissière (36) s'étend selon une direction longitudinale principale (X-X),
- dans lequel la portion de support (44) comprend un trou horizontal (48), perpendiculaire à ladite direction longitudinale principale (X-X) et traversant l'ensemble du corps de glissière (36),
- dans lequel la portion de support (44) comprend une paire de trous verticaux (52) disposés symétriquement par rapport à un plan médian (M-M) du corps de glissière (36), parallèle à ladite direction longitudinale principale (X-X).

2. Montant (4) pour les côtés (8) de plateaux de chargement de véhicules (12), selon la revendication 1, dans lequel ledit plan médian (M-M) est également un plan de symétrie pour le corps de glissière (36).

3. Montant (4) pour les côtés (8) de plateaux de chargement de véhicules (12), selon la revendication 1 ou 2, dans lequel le corps de glissière (36) comprend une paire de fentes (56), parallèles à ladite direction longitudinale principale (X-X), de manière à loger et guider une tige ou goupille de guidage (60) du levier d'actionnement (28).

4. Montant (4) pour les côtés (8) de plateaux de chargement de véhicules (12), selon la revendication 1, 2 ou 3, dans lequel ledit goujon de verrouillage/déverrouillage (32) est doté d'un mouvement d'entraînement horizontal perpendiculaire à ladite direction longitudinale principale (X-X).

5. Montant (4) pour les côtés (8) de plateaux de chargement de véhicules (12), selon l'une quelconque des revendications 1 à 3, dans lequel ledit goujon de verrouillage/déverrouillage (32) est doté d'un mouvement d'actionnement vertical, parallèle à ladite direction longitudinale principale (X-X).

6. Montant (4) pour les côtés (8) de plateaux de chargement de véhicules (12), selon l'une quelconque des revendications 1 à 5, dans lequel une fente de butée (64) est prévue, laquelle définit les butées de fin de course dans les mouvements d'extraction et de rétraction du goujon de verrouillage/déverrouillage (32).

7. Montant (4) pour les côtés (8) de plateaux de chargement de véhicules (12), selon la revendication 5, dans lequel le corps de montant (16) comprend un logement (68) pour ladite glissière (20) de sorte que, en position fermée, le levier d'actionnement (28) soit logé à l'intérieur dudit logement (68).

8. Montant (4) pour les côtés (8) de plateaux de chargement de véhicules (12), selon l'une quelconque des revendications 1 à 7, dans lequel le levier d'actionnement (28) est muni d'une biellette (62) articulée à ses deux extrémités, à une première extrémité (63) audit levier d'actionnement (28), et à une seconde extrémité (65) au corps de montant (16).

9. Montant (4) pour les côtés (8) de plateaux de chargement de véhicules (12), selon l'une quelconque des revendications 1 à 8, dans lequel la glissière (20) est en une seule pièce obtenue par moulage de matière plastique.

10. Côté (8) comprenant un montant (4) selon l'une quelconque des revendications 1 à 9, dans lequel le côté (8) est pourvu d'au moins un goujon de verrouillage/déverrouillage (32) et dans lequel ledit côté (8) est articulé au châssis d'un plateau de chargement (12).

11. Plateau de chargement (12) comprenant au moins une paire de côtés (8) selon la revendication 10, adjacents l'un à l'autre, dans lequel un premier côté (72) comprend au moins un goujon de verrouillage/déverrouillage (28) et un second côté (76) est muni d'un montant d'accouplement (80), ayant une fente (84) apte à recevoir ledit goujon de verrouillage/déverrouillage (28) du premier côté (72), pour relier mécaniquement ledit premier côté (72) et le second côté (76) entre eux.
